# EUROPEAN PATENT APPLICATION

(11) **EP 2 803 865 A1**
(43) Date of publication of application: **19.11.2014**
(21) Application number: 12858993.4
(22) Date of filing: 14.12.2012
(51) Int. Cl.: F04C 29/00, H02K 5/04, H02K 16/04, H02K 21/24

(54) **ELECTRIC-POWERED COMPRESSOR**

(30) Priority: 21.12.2011 JP 2011279088
(71) Applicant: Valeo Japan Co., Ltd., Saitama 360-0193 (JP)
(72) Inventor: JINGU, Naoki, Kumagaya-shi Saitama 360-0193 (JP); MINOWA, Masakatsu, Kumagaya-shi Saitama 360-0193 (JP)
(74) Representative: Pellegrini, Marie Claude
(86) International application number: PCT/JP2012/007998
(87) International publication number: WO 2013/094165

(57) **Abstract**

[Problem]

In an electrically-driven compressor having an axial-gap-type motor where a stator is arranged on both sides of a rotor in the axial direction, air gaps formed on both sides of the rotor are properly ensured by accurately restricting an axial position of the rotor with respect to a housing.

[Solution]

An electrically-driven compressor includes an axial-gap-type motor 3 having a first stator 13 and a second stator 14 which are arranged on both sides of a rotor 12 fixed to a shaft 11 in the axial direction in an opposedly facing manner with air gaps formed therebetween, and a compression mechanism 4 driven by the motor 3. The first stator 13 is housed in a first housing member 5 and is fixed in the axial direction, and the second stator 14 is housed in a second housing member 6 assembled to the first housing member 5 and is fixed in the axial direction. A compressor rotor fixed to the shaft is housed in a space defined between a cylinder member 26 which is fitted in the first housing member 5 in the axial direction and a partition wall 5a which is formed on the first housing member 5 thus restricting an axial position of the compressor rotor.

## Description

### Technical Field

The present invention relates to an electrically-driven compressor which is used in a refrigerating cycle of a vehicle-use air conditioner or the like, and an electrically-driven compressor which uses an axial-gap-type motor arranged in a housing as a drive source.

### Background Art

Conventionally, as electrically-driven compressors of this type, there have been known electrically-driven compressors disclosed in the following patent literatures 1 to 3.

Among these conventional electrically-driven compressors, the electrically-driven compressor disclosed in patent literature 1 includes: a hermetically sealed housing; a compression mechanism part arranged in the inside of the hermetically sealed housing; and an axial-gap-type motor which is arranged on a low-pressure side in the inside of the hermetically sealed housing and drives the compression mechanism part by way of a rotary shaft. The axial-gap-type motor used in this compressor is constituted of a stator, and a rotor which is arranged above the stator in an opposedly facing manner with a predetermined air gap formed therebetween. The compression mechanism part is constituted of a body part which is mounted in the inside of the hermetically sealed housing, a fixed scroll fixed to the body part, and a orbiting scroll which is engaged with the fixed scroll. The orbiting scroll is connected to an upper end of the rotary shaft, and the orbiting scroll is revolved due to the rotation of the rotary shaft.

Electrically-driven compressors disclosed in patent literature 2 and patent literature 3 are configured such that an axial-gap-type motor is arranged above a compression mechanism part in a hermetically sealed housing. The axial-gap-type motor includes: a disc-shaped rotor which is fixed to a rotary shaft; a first stator (upper stator) which is arranged above the rotor in the axial direction in an opposedly facing manner with an air gap formed therebetween; and a second stator (lower stator) which is arranged below the rotor in the axial direction in an opposedly facing manner with an air gap formed therebetween. The compression mechanism part includes a cylindrical body portion, and end plates which close opening ends on both sides of the body portion. The rotary shaft to which the rotor of the motor is fixed is rotatably supported by bearings mounted on both of the end plates, and a piston is driven by a crank pin mounted on the rotary shaft thus changing a volume of a compression chamber formed in the inside of the body portion.

### Citation List

### Patent Literature

PTL 1: JP-A-2006-283602
PTL 2: JP-A-2008-150962
PTL 3: JP-A-2008-172918

### Summary of Invention

### Technical Problem

In this manner, the axial-gap-type motor includes the disc-shaped rotor and the stator which faces the rotor in the axial direction in an opposed manner and hence, a large opposedly-facing area can be ensured between the rotor and the stator compared to a radial-gap-type motor whereby the axial-gap-type motor is suitable for building up a motor having a relatively large torque.

However, in the above-mentioned constitution disclosed in patent literature 1, the stator is arranged only below the rotor in an opposedly facing manner with the predetermined air gap formed therebetween and hence, when a required torque is increased, it is necessary to increase a diameter of the rotor and a diameter of the stator. Accordingly, when there is a demand for the installation of the compressor in a limited installation space, there may be a case where it is difficult to increase a diameter of the compressor thus giving rise to a drawback that it is difficult to ensure a required torque.

In this respect, as disclosed in patent literature 2 or 3, with the use of the axial-gap-type motor where the stators are arranged on both sides of the rotor in the axial direction in an opposedly facing manner, the compressor can acquire a large torque without increasing a diameter of the compressor.

However, when the axial-gap-type motor having the above-mentioned constitution is used as an electrically-driven compressor, a movable member of the compressor is mounted on the same shaft. Accordingly, if the axial position of the shaft is not accurately defined, air gaps formed between the rotor and the stators which are arranged on both sides of the rotor in an opposedly facing manner cannot be maintained at a predetermined value thus giving rise to a drawback that efficiency of the motor is lowered.

To study the patent literatures 2 and 3 from such a viewpoint, although the cylindrical body portion and the stators are fixed to an inner peripheral wall of the hermetically sealed housing, positioning of the body portion and the stator in the axial direction of the rotary shaft (shaft) is indefinite. Further, when the positions where the body portion and the stators are fixed to the inner peripheral wall of the housing are deviated, there arise a drawback that the air gaps formed between the rotor and the stators cannot be maintained at a predetermined value. Accordingly, in the above-mentioned electrically-driven compressor, it is necessary to strictly control the air gaps formed between the rotor and the stators by finely adjusting the mounting positions of the body portion and the stators. Further, in the constitutions disclosed in patent literatures 2 and 3, it is necessary to additionally prepare the end plates mounted on the body portion for restricting the axial position of the rotary shaft thus also giving rise to a drawback that the structure becomes complicated.

The invention has been made in view of the above-mentioned circumstances, and it is a principle object of the invention to provide an electrically-operated compressor having an axial-gap-type motor where a stator is arranged on both sides of a rotor in the axial direction, wherein air gaps formed between the rotor and stators arranged on both sides of the rotor in an opposedly-facing manner can be properly ensured by restricting the axial position of the rotor with the simple structure so that it is possible to make the strict control of the air gaps unnecessary.

### Solution to Problem

To achieve the above-mentioned task, an electrically-driven compressor according to the invention houses, in the inside of a housing thereof, an axial-gap-type motor having a rotor which is fixed to a shaft, and a first stator and a second stator which are arranged on both sides of the rotor in the axial direction in an opposedly facing manner with air gaps interposed therebetween, and a compression mechanism driven by the motor by way of the shaft, wherein the first stator and the second stator are fixed with respect to the housing in the axial direction, the compression mechanism is arranged on a side opposite to second stator with respect to the first stator, a partition wall which partitions the housing into a portion in which the motor is housed and a portion in which the compression mechanism is housed is formed on the housing, the shaft is configured to penetrate the first stator, to penetrate the partition wall and to enter the compression mechanism, and the compression mechanism is constituted of a compressor rotor which is fixed to the shaft, and a cylinder member which is fitted in the housing in the axial direction of the shaft and restricts an axial position of the compressor rotor by housing the compressor rotor between the cylinder member and the partition wall.

Due to such a constitution, the first stator and the second stator which are arranged on both sides of the rotor in the axial direction in an opposedly facing manner are fixed with respect to the housing in the axial direction. Further, the compressor rotor which is fixed to the shaft is housed between the cylinder member and the housing which is fitted on the cylinder member in the axial direction thus restricting the axial position of the compressor. Accordingly, the axial positions of the first and second stators with respect to the housing, and the axial positions of the shaft and the rotor fixed to the shaft with respect to the housing are unequivocally decided. Accordingly, in positioning the rotor and the stator in the axial direction, it is unnecessary to perform the particular adjustment or control so that the control of the air gaps between the rotor and the respective stators becomes unnecessary.

Further, positioning of the rotor and the stators in the axial direction is performed by fixing the cylinder member and the stator to the housing in the axial direction. Accordingly, the positioning of the rotor and the stators requires no particular parts and hence, the rotor and the stators can be positioned with the simple structure.

It is preferable that the housing for realizing the above-mentioned constitution is constituted of a plurality of housing members which are formed by dividing the housing in the axial direction of the shaft, and the partition wall is formed on the housing member into which the cylinder member is fitted.

For example, the housing may be configured such that the housing is constituted of a first housing member and a second housing member which are formed by dividing the housing in the axial direction of the shaft, the first stator is housed in and fixed to the first housing member, and the second stator is housed in and fixed to the second housing member, the partition wall is formed on the first housing member and the cylinder member is fitted in the first housing member.

Due to such a constitution, even when the housing is constituted of the plurality of housing members, positioning in the axial direction of the housed part such as the rotor which is housed in the inside of the housing is not impaired, and an operation of fixing the housed part to the housing is facilitated.

In the first housing member, a portion which houses the first stator and a portion which houses the compression mechanism may be formed of different housing members.

To surely restrict the movement of the shaft in the axial direction thus accurately performing the positioning of the rotor with respect to the housing, it is preferable that the compressor rotor is fixed to the shaft by press-fitting the shaft into the compressor rotor.

The compression mechanism which uses the above-mentioned compressor rotor may preferably be a rotary type compression mechanism or a vane type compression mechanism which includes the compressor rotor which is housed in a rotor housing space defined between the partition wall and the cylinder member, and vanes which are slidably mounted in vane grooves formed on the compressor rotor and are slidably brought into contact with an inner peripheral wall of the rotor housing space.

It is preferable that the first housing member and the second housing member are jointed to each other on a compression mechanism side with respect to an end surface of the rotor fixed to the shaft.

In assembling the above-mentioned electrically-driven compressor, the axial position of the shaft with respect to the housing is defined by the compressor rotor fixedly mounted on the shaft and hence, it is desirable to assemble the rotor of the motor on the shaft after restricting the axial position of the compressor rotor by the cylinder member and the housing member into which the cylinder member is fitted. In this case, by adopting the constitution where the first housing member and the second housing member are jointed to each other on a compression mechanism side with respect to an end surface of the rotor fixed to the shaft, the air gaps formed between the rotor and the stators can be confirmed more easily with naked eyes or the like. Further, it is possible to obviate a drawback that an edge of the rotor impinges on the housing member at the time of assembling the rotor on the shaft.

### Advantageous Effects of Invention

As has been described heretofore, according to the electrically-driven compressor of the invention, the first stator and the second stator which are arranged on both sides of the rotor in the axial direction in an opposedly facing manner are fixed with respect to the housing in the axial direction. The partition wall is provided between the portion of the housing which houses the motor and the portion of the housing which houses the compression mechanism, and the compressor rotor fixed to the shaft is housed between the cylinder member fitted in the housing in the axial direction of the shaft and the partition wall of the housing thus restricting the axial position of the compressor rotor. Accordingly, the movement of the shaft in the axial direction is restricted, the axial position of the rotor with respect to the housing is decided unequivocally, and the axial positions of the first stator and the second stator with respect to the housing are unequivocally decided and hence, the air gaps formed between the rotor and the stators which face the rotor in an opposed manner can be properly ensured. Accordingly, the strict control of the air gaps between the rotor and the stators becomes unnecessary, and it is possible to properly form the air gaps with the simple structure without using particular parts.

### Brief Description of Drawings

[Fig. 1]

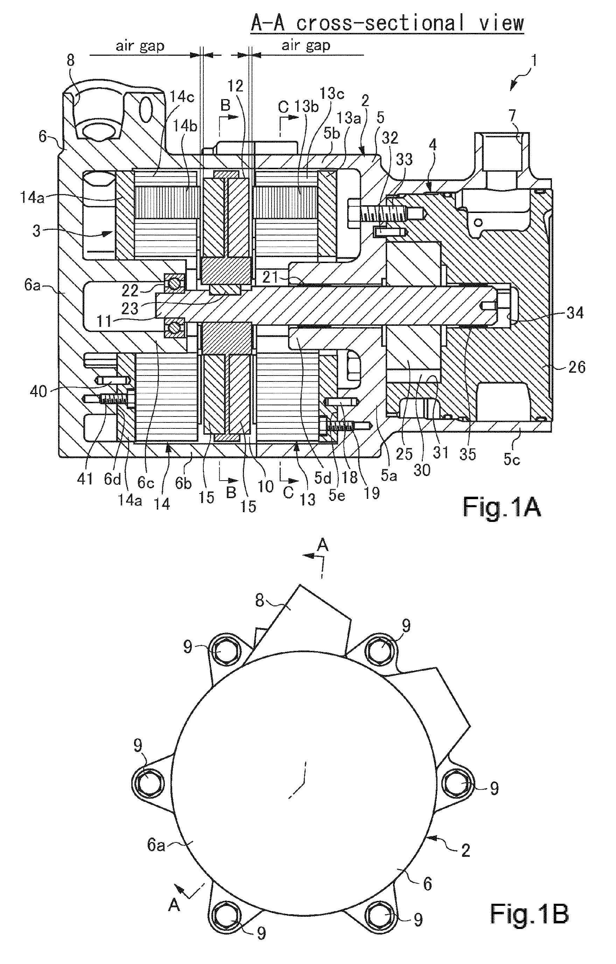

   Fig. 1(a) and Fig. 1(b) are views showing the overall constitution of an electrically-driven compressor according to the invention, wherein Fig. 1(a) is a side cross-sectional view of the electrically-driven compressor taken along a line A-A in Fig. 1(b), and Fig. 1(b) is a view of the electrically-driven compressor shown in Fig. 1(a) as viewed from a left side.
[Fig. 2]

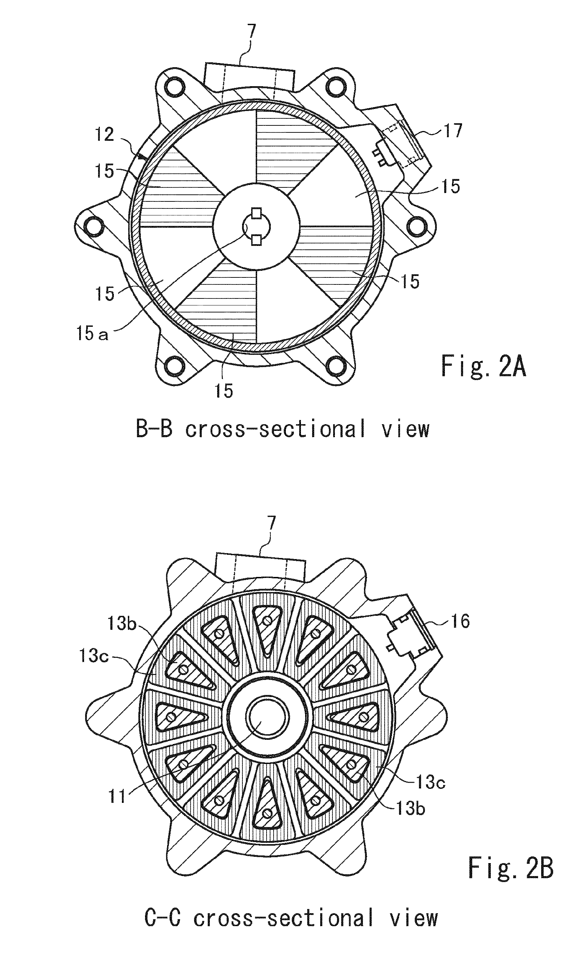

   Fig. 2(a) and Fig. 2(b) are cross-sectional views, wherein Fig. 2(a) is a cross-sectional view of a rotor portion shown in Fig. 1(a) taken along a plane perpendicular to an axis of a shaft, that is, taken along a line B-B, and Fig. 2(b) is a cross-sectional view of a stator portion shown in Fig. 1(a) taken along a plane perpendicular to the axis of the shaft, that is, taken along a line C-C.
[Fig. 3]

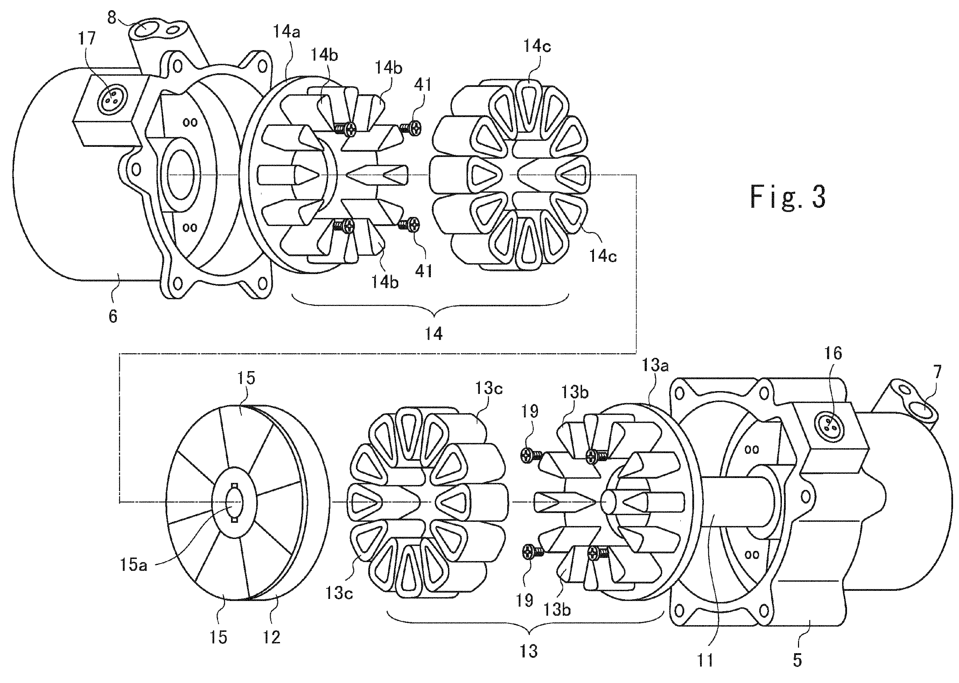

   Fig. 3 is an exploded perspective view of a motor portion of the electrically-driven compressor according to the invention.
[Fig. 4]

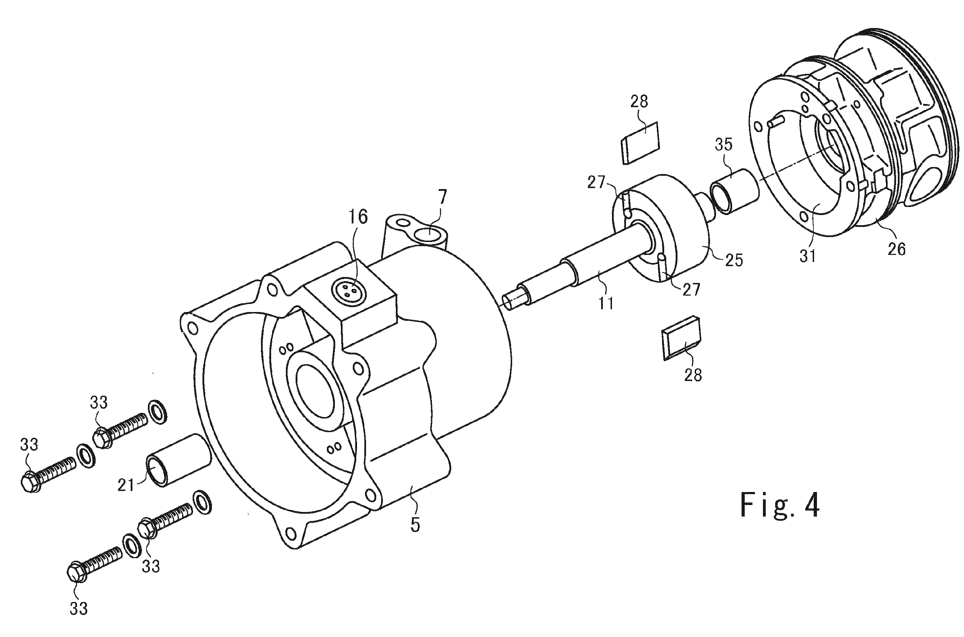

   Fig. 4 is an exploded perspective view of a compression mechanism of the electrically-driven compressor according to the invention.

### Description of Embodiments

Hereinafter, an electrically-driven compressor according to the invention is explained by reference to drawings.

In Fig. 1, an electrically-driven compressor 1 is used in a refrigerating cycle where a refrigerant is used as a working fluid, for example. In the inside of a housing 2 which is made of an aluminum alloy, an axial-gap-type motor 3 is arranged on a left side in the drawing, and a compression mechanism 4 which is driven by the motor 3 is arranged on a right side in the drawing. In Fig. 1, a left side of the electrically-driven compressor 1 in the drawing is referred to as a front side of the electrically-driven compressor 1, and a right side of the electrically-driven compressor 1 in the drawing is referred to as a rear side of the electrically-driven compressor 1.

In this embodiment, the housing 2 is constituted of a first housing member 5 on a rear side and a second housing member 6 on a front side, and these two housing members 5, 6 are fastened to each other in the axial direction using bolts 9.

The first housing member 5 has a cylindrical shape, and a partition wall 5a is formed on an approximately middle portion of the first housing member 5. A motor-housing-side cylindrical portion 5b having an open front end is formed on a front side with respect to the partition wall 5a, and a compression mechanism-housing-side cylindrical portion 5c having an open rear end is formed on a rear side with respect to the partition wall 5a. A thrust surface 5e which defines an axial position of a back yoke 13a described later and a boss portion 5d which supports a shaft 11 described later in a state where the shaft 11 penetrates the boss portion 5d are integrally formed with the partition wall 5a. A discharge port 7 through which a refrigerant compressed by the compression mechanism 4 is discharged is formed in the compression mechanism-housing-side cylindrical portion 5c.

The second housing member 6 has a bottomed cylindrical shape with a closed front side. The second housing member 6 is formed of a bottom wall 6a which closes a front end of the second housing member 6, and a motor-housing-side cylindrical portion 6b which extends rearward from the bottom wall 6a and has an open rear end. A thrust surface 6d which defines an axial position of a back yoke 14a and a boss portion 6c which supports the shaft 11 of the motor 3 are integrally formed with the bottom wall 6a. A suction port 8 through which a refrigerant to be compressed by the compression mechanism 4 is sucked is formed in the motor-housing-side cylindrical portion 6b.

The axial-gap-type motor 3 is housed in a motor housing space 10. The motor housing 10 is defined in a surrounding manner by the partition wall 5a and the motor-housing-side cylindrical portion 5b of the first housing member 5, and the bottom wall 6a and the motor-housing-side cylindrical portion 6b of the second housing member 6 when the first housing member 5 and the second housing member 6 are assembled to each other. The compression mechanism 4 is housed in the compression mechanism-housing-side cylindrical portion 5c of the first housing member 5. The motor housing space 10 is communicated with the suction port 8 thus constituting a low pressure passage which guides a refrigerant to the compression mechanism 4.

Also as shown in Fig. 2 and Fig. 3, the axial-gap-type motor 3 includes: a disc-shaped rotor 12 which is fixed to the shaft 11; a first stator 13 which is arranged on a rear side of the rotor 12 in an opposedly facing manner in the axial direction with an air gap formed therebetween; and a second stator 14 which is arranged on a front side of the rotor 12 in an opposedly facing manner in the axial direction with an air gap formed therebetween.

A plurality of (for example, 8) permanent magnets 15 each having a sector shape are arranged on the both faces of the rotor 12 along the circumference of the rotor 12, and a through hole 15a into which the shaft 11 is inserted is formed at the center of the rotor 12.

The first stator 13 and the second stator 14 have substantially the same constitution. That is, the first stator 13 and the second stator 14 respectively include: the disc-shaped back yoke 13a, 14a which is formed of a magnetic material having a hole at the center thereof; a plurality of teeth 13b, 14b which are mounted on the back yoke 13a, 14a in an erected manner in the axial direction toward a rotor side from the back yoke 13a, 14a and are equidistantly arranged in the circumferential direction; and three-phase exciting coils 13c, 14c which are preliminarily formed by winding such that the exciting coils 13c, 14c can be inserted into the plurality of teeth 13b, 14b respectively. An electric current is supplied to the exciting coils 13c, 14c from an inverter not shown in the drawing via connectors 16, 17 which are mounted on the respective housing members.

The radial position of the first stator 13 is decided by a positioning pin 18 which is mounted on the partition wall 5a of the first housing member 5, and the axial position of the first stator 13 is decided by the thrust surface 5e formed on the partition wall 5a. To be more specific, the first stator 13 is housed in and fixed to the first housing member 5 by fixing the back yoke 13a to the thrust surface 5e from a motor housing space 10 side (from a front side) using bolts 19. The radial position of the second stator 14 is decided by a positioning pin 40 which is mounted on the bottom wall 6a of the second housing member 6, and the axial position of the second stator 14 is decided by the thrust surface 6d formed on the bottom wall 6a. To be more specific, the second stator 14 is housed in and fixed to the second housing member 6 by fixing the back yoke 14a to the thrust surface 6d from a motor housing space 10 side (from a rear side) using bolts 41.

With respect to the shaft 11 of the motor 3, a rear side of the shaft 11 penetrates the first stator 13, penetrates the boss portion 5d formed on the partition wall 5a of the first housing member 5, and extends to the compression mechanism 4. The shaft 11 is rotatably supported at a portion thereof penetrating the boss portion 5d through a plane bearing 21. Further, a front side of the shaft 11 penetrates the second stator 14, and is rotatably supported by a boss portion 6c which is formed on the bottom wall 6a of the second housing member 6 in an erected manner through a ball bearing 22.

The rotor 12 is fixed at a predetermined axial position of the shaft 11 by way of a key 23 which is engaged with a key groove formed on an outer peripheral surface of the shaft 11 and a key groove formed on an inner peripheral surface of the through hole 15a formed in the rotor. The rotation of the rotor 12 is transmitted to the shaft 11 by way of the key 23. The rotation may be directly transmitted to the shaft 11 from the rotor 12 by engaging a spline or threads formed on the outer peripheral surface of the shaft 11 and a spline or threads formed on the inner peripheral surface of the rotor with each other instead of using a key.

Also as shown in Fig. 4, the compression mechanism 4 includes: a compressor rotor 25 which is fixedly mounted by press fitting on a portion of the shaft 11 which penetrates the partition wall 5a and projects into the inside of the compression mechanism-housing-side cylindrical portion 5c at a predetermined position; a cylinder member 26 which is fitted in the compression mechanism-housing-side cylindrical portion 5c of the first housing member 5 in the axial direction of the shaft 11 and houses the compressor rotor 25 therein in cooperation with the housing member 5; and vanes 28 which are slidably inserted into a plurality of vane grooves 27 formed on the compressor rotor 25 and are brought into slide contact with an inner peripheral surface (an inner peripheral wall of a rotor housing portion 31 described later) of the cylinder member 26 thus define a compression chamber 30.

With respect to the cylinder member 26, in a front side of the cylinder member 26 which constitutes a distal end side to be inserted into the compression mechanism-housing-side cylindrical portion 5c, the rotor housing portion 31 which houses the compressor rotor 25 therein is formed. The position of the cylinder member 26 with respect to the partition wall 5a of the first housing member 5 is decided by a positioning pin 32. The cylinder member 26 is fixed to the first housing member 5 in the axial direction by threadedly engaging bolts 33 with the cylinder member 26 from a motor housing space side (front side) in the axial direction with the partition wall 5a interposed therebetween. A rear end of the shaft 11 which projects from the compressor rotor 25 is inserted into the bearing hole 34 formed at the center of the cylinder member 26, and the shaft 11 is rotatably supported in a bearing hole 34 through a plane bearing 35.

Due to such a constitution, the axial position of the compressor rotor 25 with respect to the housing 2 is defined by the partition wall 5a of the first housing member 5 and the cylinder member 26 so that the axial position of the shaft 11 with respect to the housing 2 is defined. Accordingly, in a state where the compression mechanism 4 is assembled to the housing 2, the axial position of the rotor 12 which is fixed to the shaft 11 with respect to the housing 2 is defined.

In such an electrically-driven compressor, a refrigerant which flows into the motor housing space 10 through the suction port 8 is introduced into the compression chamber 30 of the compression mechanism 4 through a passage formed in the partition wall 5a but not shown in the drawing while cooling the motor 3 and, then, the sucked refrigerant is compressed by the rotation of the compressor rotor 25 and discharged from the discharge port 7 through a discharge path not shown in the drawing.

A joint position where the first housing member 5 and the second housing member 6 are made to abut each other is formed at a position closer to a compression mechanism side than a rear end surface of the rotor 12 and hence, there is no possibility that a peripheral edge of a surface of the rotor 12 which faces the stator 13 in an opposed manner interferes with the first housing member 5 at the time of assembling the rotor 12.

In assembling the above-mentioned electrically-driven compressor 1 having the above-mentioned constitution, firstly, the compressor rotor 25 is fixed to the shaft 11 by press-fitting the shaft 11 into the compressor rotor 25. The rear end of the shaft 11 to which the compressor rotor 25 is fixed is inserted and mounted in the bearing hole 34 of the cylinder member 26 through the plane bearing 35, and the vanes 28 are inserted into the vane grooves 27 formed on the compressor rotor 25. While keeping such a state, the shaft 11 is inserted into the boss portion 5d of the partition wall 5a from the rear side of the first housing member 5 through the plane bearing 21, and the cylinder member 26 is fitted into the first housing member 5 in the axial direction while being positioned with respect to the partition wall 5a of the first housing member 5 by the positioning pin 32. Then, to keep such a state, the bolts 33 are made to penetrate the partition wall 5a from a front side of the partition wall 5a and, thereafter, are threadedly engaged with the cylinder member 26 so that the cylinder member 26 is fixed to the first housing member 5 (partition wall 5a) in the axial direction.

After the compression mechanism 4 is assembled to the first housing member 5 as described above, the first stator 13 is inserted into the inside of the motor-housing-side cylindrical portion 5b of the first housing member 5, and the first stator 13 is fixed to the thrust surface 5e formed on the partition wall 5a using the bolts 19 thus defining the axial position of the first stator 13 while defining the radial position of the first stator 13 using the positioning pin 18 mounted on the first housing member 5 (partition wall 5a). On the other hand, the second stator 14 is inserted into the inside of the motor-housing-side cylindrical portion 6b of the second housing member 6, and the second stator 14 is fixed to the thrust surface 6d formed on the bottom wall 6a using the bolts 41 thus defining the axial position of the second stator 14 while defining the radial position of the second stator 14 using the positioning pin 40 mounted on the second housing member 6 (bottom wall 6a).

Thereafter, the rotor 12 is positioned and fixed at the predetermined position of the shaft 11 by inserting the key 23 into the key grooves, and the open end of the second housing member 6 in which the second stator 14 is mounted is arranged close to the open end of the first housing member 5 such that the open end of the second housing member 6 covers the rotor 12. The distal end portion of the shaft 11 is inserted into the ball bearing 22 mounted on the boss portion 6c, and the open ends of the respective housing members are made to abut each other such that the second stator 14 faces the rotor 12 in an opposed manner. Then, the first housing member 5 and the second housing member 6 which are made to abut each other are fixed to each other in the axial direction using the bolts 9.

Here, a portion (joint portion) where the first housing member 5 and the second housing member 6 are made to abut each other is arranged at the position closer to the compression mechanism side than the rear end surface of the first stator 13 is. Accordingly, it is possible to avoid the interference between the peripheral edge of the surface of the rotor 12 which faces the first stator 13 in an opposed manner and the first housing member 5 at the time of assembling the rotor 12 to the shaft 11.

In the electrically-driven compressor 1 assembled as described above, the axial position of the compressor rotor 25 which is fixedly mounted on the shaft 11 with respect to the housing 2 is defined by the partition wall 5a of the first housing member 5 and the cylinder member 26 which is fitted into the first housing member 5 in the axial direction and hence, the movement of the shaft 11 in the axial direction is restricted. Accordingly, the axial position of the rotor 12 which is mounted on the shaft 11 with respect to the housing 2 is fixed to the predetermined position which is decided in advance in a stage where the rotor 12 is mounted on the shaft 11. Further, the first stator 13 and the second stator 14 are also respectively fixed to the thrust surfaces 5e, 6d formed on the first housing member 5 and the second housing member 6 in the axial direction and hence, the axial positions of the respective stators with respect to the housing 2 are fixed to predetermined positions which are decided in advance respectively. Accordingly, it is unnecessary to perform the particular adjustment or control with respect to the positioning of the rotor 12 and the stators 13, 14 in the axial direction and hence, the air gap formed between the rotor 12 and the first stator 13 and the air gap formed between the rotor 12 and the second stator 14 can be set to predetermine values which are decided in advance respectively.

Accordingly, the strict control of the air gaps between the rotor 12 and the respective stators 13, 14 becomes unnecessary. Further, the axial positions of the rotor 12 and the stators 13, 14 are restricted by fixing the cylinder member 26 and the stators 13, 14 with respect to the housing 2 in the axial direction. Accordingly, the positioning of the rotor 12 and the stators 13, 14 requires no particular parts and hence, the rotor 12 and the stators 13, 14 can be positioned with the simple structure.

The first housing member 5 and the second housing member 6 are fixed to each other in the axial direction using the bolts 9. Accordingly, even when the housing member is constituted of a plurality of members (two members), there is no possibility that the axial positioning of the parts to be housed in the inside of the housing such as the rotor is impaired and hence, the axial positions of the shaft 11 and the rotor 12 with respect to the housing 2 can be accurately defined. Further, an operation of fixing the parts such as the rotor 12 which are housed in the inside of the housing 2 is also facilitated.

In the above-mentioned constitution, the explanation has been made by taking the case where the first stator 13 and the second stator 14 are fixed to the thrust surfaces 5e, 6d respectively using the bolts 9, 41 as an example. However, the axial positions of the stators may be fixed using snap rings. Alternatively, the axial positions of the stators may be fixed by so-called resin molding where a molten resin is filled into spaces formed between the stators and the housings in a state where the respective stators are brought into contact with the thrust surfaces 5e, 6d of the respective housings.

In the above-mentioned constitution, the explanation has been made by taking the case where the housing 2 is constituted of two members, that is, the first housing member 5 and the second housing member 6 as an example. However, the housing 2 may be constituted of three or more housing members formed by dividing the housing in the axial direction. For example, the first housing member 5 may be configured such that the first housing member 5 is further divided into two members consisting of a member which houses and fixes the first stator 13 therein and a member which houses and fixes the compression mechanism 4 therein, and these members are assembled to each other in the axial direction.

### Reference Signs List

1: electrically-driven compressor
2: housing
3: motor
4: compression mechanism
5: first housing member
5a: partition wall
5e: thrust surface
6: second housing member
6a: bottom wall
6d: thrust surface
11: shaft
12: rotor
13: first stator
14: second stator
25: compressor rotor
26: cylinder member
27: vane groove
28: vane

## Claims

1. An electrically-driven compressor which houses, in the inside of a housing (2) thereof, an axial-gap-type motor (3) having a rotor (12) which is fixed to a shaft (11), and a first stator (13) and a second stator (14) which are arranged on both sides of the rotor (12) in the axial direction in an opposedly facing manner with air gaps interposed therebetween, and a compression mechanism (4) driven by the motor (3) by way of the shaft (11), wherein
the first stator (13) and the second stator (14) are fixed with respect to the housing (2) in the axial direction,
the compression mechanism (4) is arranged on a side opposite to second stator (14) with respect to the first stator (13),
a partition wall (5a) which partitions the housing (2) into a portion in which the motor (3) is housed and a portion in which the compression mechanism (4) is housed is formed on the housing (2),
the shaft (11) is configured to penetrate the first stator (13), to penetrate the partition wall (5a) and to reach the compression mechanism (4), and
the compression mechanism (4) is constituted of a compressor rotor (12) which is fixed to the shaft (11), and a cylinder member (26) which is fitted in the housing (2) in the axial direction of the shaft (11)and restricts an axial position of the compressor rotor (12) by housing the compressor rotor (12) between the cylinder member (26) and the partition wall (5a).

2. The electrically-driven compressor according to claim 1, wherein the housing (2) is constituted of a plurality of housing members (5,6) which are formed by dividing the housing (2) in the axial direction of the shaft (11), and the partition wall (5a) is formed on the housing member (5) into which the cylinder member (26) is fitted.

3. The electrically-driven compressor according to claim 1 or 2, wherein the housing (2) is constituted of a first housing member (5) and a second housing member (6) which are formed by dividing the housing in the axial direction of the shaft (11),
the first stator (13) is housed in and fixed to the first housing member (5), and the second stator (14) is housed in and fixed to the second housing member (6), and
the cylinder member (26) is fitted in the first housing member (5).

4. The electrically-driven compressor according to any one of claims 1 to 3, wherein the compressor rotor (12) is fixed to the shaft (11) by press-fitting the shaft (11) into the compressor rotor (12).

5. The electrically-driven compressor according to any one of claims 1 to 4, wherein the compression mechanism (4) is a vane type compression mechanism which includes the compressor rotor (12) which is housed in a rotor housing space defined between the partition wall (5a) and the cylinder member (26), and vanes (28) which are slidably mounted in vane grooves (27) formed on the compressor rotor (12) and are slidably brought into contact with an inner peripheral wall of the rotor housing space.

6. The electrically-driven compressor according to claim 3, wherein the first housing member (5) and the second housing member (6) are jointed to each other on a compression mechanism (4) side with respect to an end surface of the rotor (12) fixed to the shaft (11).
